# EUROPÄISCHE PATENTSCHRIFT

(11) **EP 0 699 603 B1**
(45) Veröffentlichungstag und Bekanntmachung des Hinweises auf die Patenterteilung: **18.02.1998**
(21) Anmeldenummer: 95112127.6
(22) Anmeldetag: 02.08.1995
(51) Int. Cl.: B65G 21/22, B41F 13/03, B41F 21/00

(54) **Kettenführungsbahn für einen Kettentrieb mit Rollenketten, vorzugsweise in einer Druckmaschine**
Chain guide track for a chain drive with roller chains, in particular in a printing machine
Guide pour chaîne dans une transmission par chaîne avec des chaînes à rouleaux, en particulier dans une machine à imprimer

(30) Priorität: 03.09.1994 DE 4431492
(43) Veröffentlichungstag der Anmeldung: 06.03.1996
(73) Patentinhaber: MAN Roland Druckmaschinen AG, 63075 Offenbach (DE)
(72) Erfinder: Wenzel, Jürgen, D-63512 Hainburg (DE); Wolski, Harakd, D-63110 Rogau (DE)
(74) Vertreter: Marek, Joachim, Dipl.-Ing.

(56) Entgegenhaltungen:
- DE-B- 2 246 061
- DE-U- 9 320 257

## Beschreibung

Die Erfindung betrifft eine Kettenführungsbahn für Rollenketten, vorzugsweise in einer Druckmaschine, deren Rollenketten dem Bogentransport dienen.

Eine Kettenführungsbahn dieser Art ist durch das DE-G 9 320 257.1 bekannt. Die Kettenführungsbahn besitzt in Transportrichtung der Rollenkette betrachtet in einem definierten Abstand voneinander angeordnete Öffnungen, die die Dicke der Kettenführungsbahn durchdringen. Die vorzugsweise als Schlitze ausgeführten Öffnungen verlaufen in einer weiteren Ausbildung auch durch den die Kettenführungsbahn stützenden Grundkörper, der als Halterungsteil mit dem benachbarten Maschinengestell verbunden ist. Die Erfindung soll das Ansammeln von Papierstaub bzw. von Farbresten verhindern, indem der Papier-/Farbstaub kontinuierlich aus dem Bereich der Kettenführungsbahn herausgefördert wird und gleichzeitig die Leichtgängigkeit der Rollenketten zwecks Verschleißreduzierung erhöht wird.

Nachteilig ist, daß diese Öffnungen, insbesondere die Schlitze, den Lauf der Rollenkette beeinflussen. Durch Abrollen der Kettenrollen in Transportrichtung auf der mit Schlitzen/Öffnungen versehenen Lauffläche treten Stöße auf, die insbesondere bei hohen Transportgeschwindigkeiten die Kettenschwingungen erhöhen. Zur Montage der einzelnen Bauteile untereinander werden keine konkreten Hinweise gegeben.

Es ist weiterhin im Druckmaschinenbau, beispielsweise bei auf der A- (Antriebs) und B- (Bedien)-Seite angeordneten Kettenführungsbahnen in Auslegern bekannt, daß die einzelnen, zu einer Kettenführungsbahn gefügten Bauteile, in Stoß-an-Stoß-Montage fluchtend angeordnet werden. Diese Stöße (Übergänge) der einzelnen Bauteile der Kettenführungsbahn führen analog zum DE-G 9 320 257.1 zu unerwünschten Kettenschwingungen, erhöhen die Laufgeräusche und fördern den Verschleiß.

Es sind weiterhin Kettenführungsbahnen bekannt, die bei Draufsicht auf die Lauffläche schräg verlaufende oder im rechten Winkel ausgespart überlappende Übergänge zwischen den einzelnen Bauteilen aufweisen. Diese Ausführungen tragen zur Stoßreduzierung bei, haben jedoch den Nachteil, daß diese Bauteile nur für eine Seite des Kettentriebes geeignet sind und somit eine hohe Teilevielfalt erforderlich wird.

Aufgabe der Erfindung ist es eine Lösung zu entwickeln, die an den Übergängen der Kettenführungsbahn die Schwingungen spürbar dämpft und die Teilevielfalt reduziert, indem ein möglichst universeller Einsatz der einzelnen Bauteile für die Kettenführungsbahn gewährleistet wird.

Erfindungsgemäß wird die Aufgabe durch die kennzeichnenden Merkmale des Hauptanspruches gelöst. Weiterbildungen ergeben sich aus den Unteransprüchen. Durch die erfindungsgemäße Ausbildung der Übergänge wird eine Teilevereinheitlichung erreicht. Ebenso ist die Anzahl der Übergänge gegenüber herkömmlichen Kettenführungsbahnen reduziert. Die Kettenschwingung am Übergang reduziert sich, da die Traganteile der Kettenrolle stets von annähernd der Mitte der Lauffläche zu den Seitenrändern verlaufen. Die erfindungsgemäße Ausbildung der Übergänge gestattet weiterhin eine Reduzierung der dynamischen Belastung des Kettentriebes, der sich unter Umständen auch negativ auf benachbarte Baugruppen auswirken kann. Die Erfindung ist nicht auf Ausleger in Druckmaschinen beschränkt, vielmehr eignet sie sich ebenfalls für Kettentriebe, die als Zwischensysteme zwischen Druckwerken untereinander oder zwischen Druckwerken und Weiterverarbeitungseinheiten, beispielsweise Lackierwerken Verwendung finden, oder auch für durch die gesamte Druckmaschine endlos verlaufenden Kettenführungsbahnen.

Die Erfindung soll an einem Ausführungsbeispiel näher erläutert werden. Dabei zeigen:

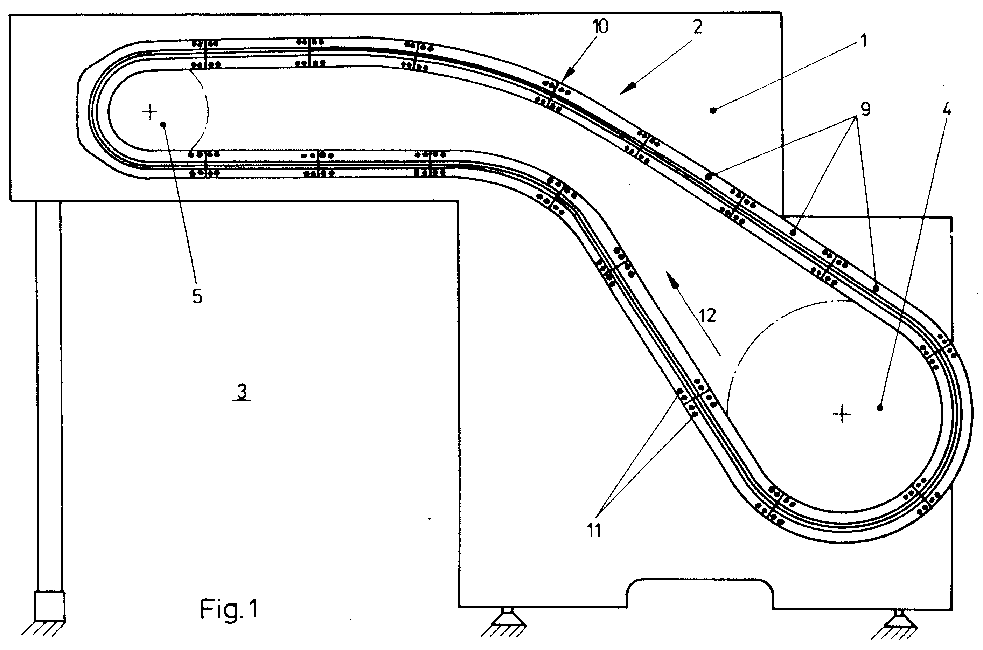

- Fig. 1: eine schematische Seitenansicht einer Kettenführungsbahn,
- Fig. 2: eine Draufsicht eines Überganges in einer Kettenführungsbahn,.
- Fig. 3: eine weitere Draufsicht analog Fig. 2.

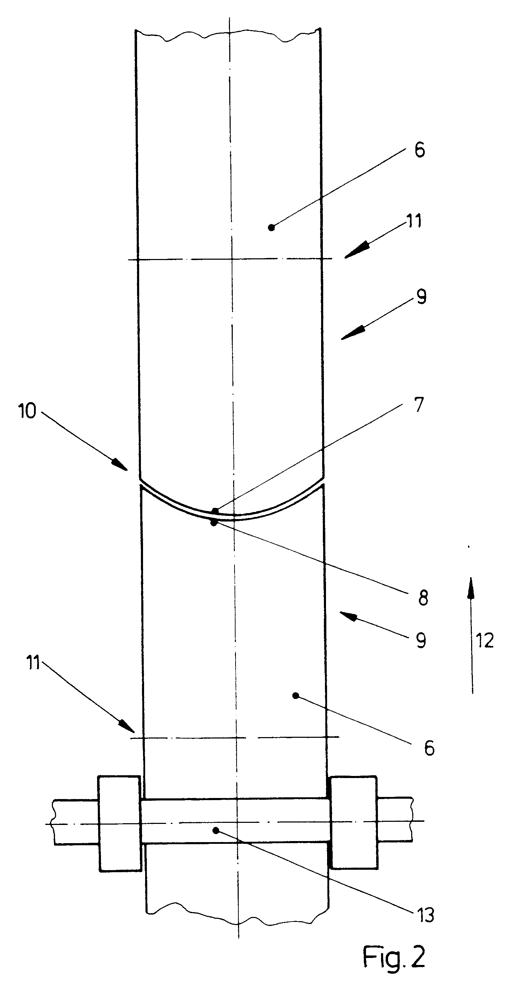

In einer bogenverarbeitenden Rotationsdruckmaschine ist einem Druckwerk oder einer Weiterverarbeitungseinheit ein Ausleger in Bogenlaufrichtung nachgeordnet. Der Ausleger besteht in bekannter Weise aus je einem Seitenständer 1, der an der A- und B-Seite angeordnet ist, weiterhin aus einer Auslegertrommel 4 mit Kettenrädern sowie auf jeder Seite oberhalb eines Stapelbereiches 3 einem Umlenkkettenrad 5. Um die Auslegertrommel 4 mit Kettenrädern und die Umlenkkettenräder 5 werden jeweils ein endloser Kettentrieb in Kettenführungsbahnen 2 geführt. Je eine Kettenführungsbahn 2 ist über Befestigungsstellen 11 lösbar an Abstandshaltern fixiert, welche an dem Seitenständer 1 befestigt sind. Die Abstandshalter tragen obere und untere Kettenführungsbahnen 2 zwischen denen die Kettenrollen 13 des Kettentriebes laufen. Aus einer Mehrzahl von fluchtenden Bauteilen 9 ist in Stoß-an-Stoß-Montage jede Kettenführungsbahn 2 zusammengesetzt. An Übergängen 10, die durch einzelne Bauteile 9 gebildet sind, weist jedes in Laufrichtung 12 des Kettentriebes vorgeordnete Bauteil 9 eine annähernd konkave Stirnseite und das jeweils in Laufrichtung 12 nachgeordnete Bauteil 9 eine annähernd konvexe Stirnseite 7 auf (Fig. 2). Die Stirnseiten 7, 8 sind benachbart, so daß der Stoß im Übergang 10 gering ist.

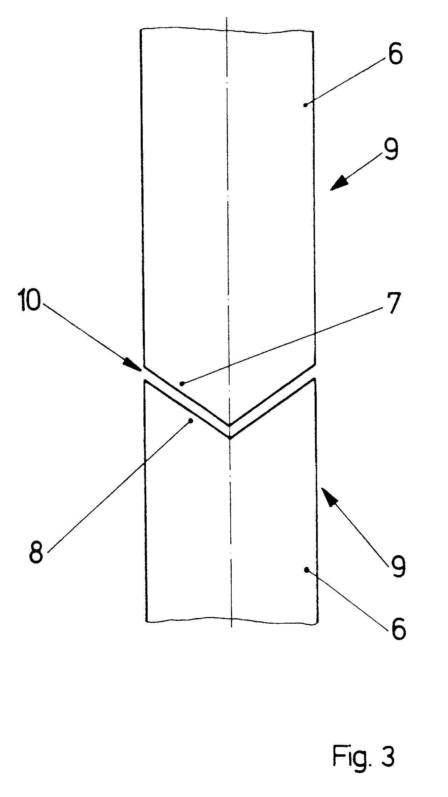

Eine weitere Ausführung der Erfindung stellt der Übergang 10 gemäß Fig. 3 dar. Danach ist dieser im wesentlichen durch die Stirnseite 7 des ersten Bauteils 9 als konvexes Polygon und die benachbarte Stirnseite 8 des zweiten Bauteiles 9 als konkaves Polygon gebildet. Bevorzugt ist der polygonale Übergang 10 symmetrisch ausgeführt, so daß die Austauschbarkeit zwischen der A- und B-Seite der Seitenständer 1 gewährleistet wird. Weiterhin wird durch die symmetrische Anordnung der Stirnseiten 7, 8 ein kontinuierlicher Übergang der Traganteile der Kettenrollen 13 erzielt.

Die Wirkungsweise ist wie folgt:
Von einer vorgeordneten Baugruppe einer Druckmaschine wird ein Bogen mittels Auslegertrommel 4 und Greifersystemen abgenommen und über den Kettentrieb zu einem Stapel bereich 3 geführt und dort abgelegt. Der Kettentrieb läuft über die Umlenkkettenräder 5 zurück zur Auslegertrommel 4. Die Kettenrollen 13 des Kettentriebes laufen auf einer Lauffläche 6 des jeweiligen Bauteils 9 in Laufrichtung 12. Kommt eine Kettenrolle 13 in den Bereich der Übergänge 10, so verläßt der mittlere Teil der Kettenrolle zuerst die konkave Stirnseite 8 des vorgeordneten Bauteils 9 und legt sich auf dem nachfolgenden Bauteil 9 in der Mitte der konvexen Stirnseite 7 zuerst auf. An den Außenseiten der Laufflächen 6 liegt die Kettenrolle 13 dabei noch auf dem vorgeordneten Bauteil 9 auf. Im weiteren Bewegungsverlauf der Kettenrolle 13 in Laufrichtung 12 steigt von der Mitte der konvexen Stirnseite 7 ausgehend der Traganteil des nachgeordneten Bauteils 9 stetig an, während der Traganteil an den Außenseiten der konkaven Stirnseite 8 des vorgeordneten Bauteils 9 abnimmt.

### Bezugszeichenaufstellung

- 1: Seitenständer
- 2: Kettenführungsbahn
- 3: Stapelbereich
- 4: Ausleger
- 5: Umlenkkettenrad
- 6: Lauffläche
- 7: konvexe Stirnseite
- 8: konkave Stirnseite
- 9: Bauteil
- 10: Übergang
- 11: Befestigungsstelle
- 12: Laufrichtung
- 13: Kettenrolle

## Patentansprüche

1. Kettenführungsbahn für einen Kettentrieb mit Rollenketten, vorzugsweise in einer Druckmaschine mit mindestens einer fluchtenden Lauffläche, welche in Stoß-an-Stoß-Montage von mindestens zwei Bauteilen in Laufrichtung der Kette gebildet ist,
**dadurch gekennzeichnet**,
daß eine annähernd konvexe Stirnseite (7) und eine benachbarte, annähernd konkave Stirnseite (8) als Übergang (10) zweier Bauteile angeordnet sind.

2. Kettenführungsbahn nach Anspruch 1,
**dadurch gekennzeichnet**,
daß die Stirnseite (7) ein konvexes Polygon und die benachbarte Stirnseite (8) ein konkaves Polygon als Übergang (10) sind.

3. Kettenführungsbahn nach Anspruch 1,
**dadurch gekennzeichnet**,
daß die mit den Stirnseiten (7, 8) versehenen Bauteile (9) als obenliegende und untenliegende Kettenführungsbahnen (2) angeordnet sind.

4. Kettenführungsbahn nach einem der vorhergehenden Ansprüche,
**dadurch gekennzeichnet**,
daß die Kettenführungsbahnen (2) mit mehreren Abstandshaltern am jeweiligen Seitenständer (1) lösbar verbunden sind.

## Claims

1. Chain guide track for a chain drive with roller chains preferably in a printing press with at least one flush running surface which is formed in joint-to-joint mounting on at least two components in the direction of running of the chain, characterised in that a substantially convex end face (7) and a neighbouring substantially concave end face (8) are arranged as the transition (10) of two components.

2. Chain guide track according to Claim 1, characterised in that as the transition (10), the end face (7) is a convex polygon and the neighbouring end face (8) a concave polygon.

3. Chain guide track according to Claim 1, characterised in that the components (9) provided with the end faces (7, 8) are arranged as over- and underlying chain, guide tracks (2).

4. Chain guide track according to one of the preceding Claims, characterised in that the chain guide tracks (2) are releasably connected with several distance mountings to the respective side stands (1).

## Revendications

1. Voie de guidage de chaîne pour une transmission par chaîne ayant des chaînes à rouleaux, avantageusement dans une machine d'impression, comportant au moins une surface de roulement en alignement, laquelle est formée par montage bout à bout d'au moins deux parties constitutives dans la direction d'avance de la chaîne,
caractérisée en ce qu'une face frontale (7) approximativement convexe et une face frontale voisine (8) approximativement concave sont prévues comme transition (10) entre deux parties constitutives.

2. Voie de guidage de chaîne selon la revendication 1,
caractérisée en ce que, comme transition (10), la face frontale (7) est un polygone convexe et la face frontale (8) voisine un polygone concave.

3. Voie de guidage de chaîne selon la revendication 1,
caractérisée en ce que les parties constitutives (9) munies des faces frontales (7,8) sont prévues comme voies de guidage de chaîne (2) supérieure et inférieure.

4. Voie de guidage de chaîne selon une des revendications précédentes,
caractérisée en ce que les voies de guidage de chaîne (2) sont reliées de façon amovible à plusieurs entretoises sur le support latéral respectif (1).
